# DEMANDE DE BREVET EUROPEEN

(11) **EP 1 236 506 A1**
(43) Date de publication de la demande: **04.09.2002**
(21) Numéro de dépôt: 02290416.3
(22) Date de dépôt: 21.02.2002
(51) Int. Cl.: B01J 8/04, B01J 8/12

(54) **Réacteur multi-étages catalytique à faible épaisseur de lit avec échangeur thermique interne, et son utilisation**

(30) Priorité: 28.02.2001 FR 0102841
(71) Demandeur: INSTITUT FRANCAIS DU PETROLE, 92852 Rueil-Malmaison Cedex (FR)
(72) Inventeur: Mege, Philippe, 38121 Reventin Vaugris (FR); Hoffmann, Frédéric, 69110 Sainte Foy les Lyon (FR); Lenglet, Eric, 92500 Rueil Malmaison (FR)

(57) **Abrégé**

Enceinte réactionnelle allongée comportant au moins deux étages dans le sens vertical dans laquelle est réalisée une réaction catalytique endothermique ou exothermique et comprenant :
- une zone réactionnelle (12a, 12b), catalytique par étage (6,7),
- l'introduction (2) d'un fluide réactionnel au niveau d'un étage adapté à une circulation transversale du fluide sur toute l'étendue verticale de la zone réactionnelle,
- l'introduction et le soutirage du catalyseur,
- un échangeur (5a) thermique des fluides réactionnels situé à l'intérieur de l'enceinte entre deux zones réactionnelles successives,
- des moyens de transport (6) des fluides réactionnels d'un étage à un autre connectés de préférence à l'échangeur de l'étage considéré et à l'introduction des fluides réactionnels de l'étage suivant,
- des moyens de récupération des fluides réactionnels en aval du dernier étage.

La variation de température dans chaque zone et le niveau de température sont ajustés respectivement par l'épaisseur de chaque zone et par l'échangeur thermique.

## Description

La présente invention concerne un réacteur ou enceinte réactionnelle à l'intérieur duquel est réalisée une réaction catalytique sur au moins un fluide réactif en présence d'un catalyseur. Elle concerne aussi un procédé de conversion d'hydrocarbures dans ce réacteur et son application à la déshydrogénation de paraffines linéaires notamment.

L'arrière plan technologique est illustré par les brevets US-A-4 040 794, US-A-4 423 022, FR-A- 2 129 913 et FR-A-1 175 454.

Dans de nombreuses industries, comme par exemple les industries pétrochimiques ou chimiques, on utilise des procédés de traitement qui mettent en oeuvre des réacteurs dans lesquels se produisent, entre au moins un fluide réactif et un catalyseur, des réactions chimiques sous certaines conditions de température et de pression. Suivant que ces réactions chimiques produisent de la chaleur ou en absorbent, elles sont dites respectivement exothermiques ou endothermiques.

Dans le cas où ladite réaction chimique (endothermique ou exothermique) est équilibrée, il est connu qu'une variation de la température permet de déplacer l'équilibre de ladite réaction dans un sens ou dans l'autre.

Bien que son domaine d'application soit plus étendu, la présente invention s'applique plus particulièrement au cas d'une réaction endothermique de déshydrogénation d'hydrocarbures. En particulier, le présent dispositif est particulièrement adapté à la mise en oeuvre d'une réaction de déshydrogénation de paraffines longues, étape entrant dans le procédé de fabrication de composés aromatiques dont au moins l'un des substituants du cycle aromatique est une chaîne aliphatique linéaire, en général alcoyle, comprenant souvent de 3 à 20 atomes de carbone, et le plus souvent de 10 à 14 atomes (appelé suivant la dénomination anglo-saxonne Linear Alkyl Benzène (LAB)).
Dans la suite de la présente description et bien que le présent dispositif soit susceptible de s'appliquer à tout type de réaction endothermique ou exothermique on prendra l'exemple de ladite déshydrogénation de paraffines linéaires comprenant en général de 3 à 20 atomes, de préférence entre 10 et 14 atomes de carbone, pour obtenir des composés oléfiniques monoinsaturés.

De plus, dans le cadre de ladite déshydrogénation, plusieurs aspects sont à considérer afin de déterminer les conditions optimales d'obtention d'oléfines monoinsaturés. Ainsi, le niveau de conversion des réactifs est nécessairement limité par la sélectivité de la réaction de déshydrogénation : des conditions réactionnelles permettant une forte conversion des paraffines entraînent la formation parasitaire de composés poly-insaturés comme les di- ou les tri-oléfines, généralement considérées par l'homme du métier comme précurseurs de réactions parasitaires conduisant à la formation irréversible d'aromatiques, de poly-aromatiques et de coke. Ces réactions parasitaires sont extrêmement néfastes dans le cadre de la synthèse de précurseurs d'alkylation de LAB et doivent par conséquent être minimisées.

En particulier, de fortes températures déplacent l'équilibre de la réaction endothermique dans le sens de la formation d'insaturés et entraîne des niveaux de conversions élevés mais une sélectivité en composés mono-insaturés plus faible. De plus, des températures trop élevées entraînent une diminution de la durée de vie du catalyseur et/ou une modification des caractéristiques structurales de celui-ci (structure cristalline, taille des grains par exemple).

Pour résoudre ces problèmes deux voies peuvent être envisagées seules ou en combinaison :
- développer un catalyseur présentant une forte sélectivité pour la formation de mono-oléfines.
- se placer dans des conditions opératoires permettant une sélectivité importante quant à la formation de composés mono-insaturés, tout en maintenant un niveau acceptable de conversion, par exemple en contrôlant le profil de température des fluides réactionnels circulant dans le réacteur.

C'est ce contrôle du profil de température des fluides réactionnels dans le réacteur qui fait l'objet de la présente invention. Le présent dispositif propose une solution simple à réaliser et peu coûteuse palliant au moins en partie les problèmes exposés précédemment.

Dans le cadre de procédés mettant en oeuvre une réaction catalytique, la technologie la plus fréquemment utilisée est celle des lits fixes. Le lit fixe est constitué d'un empilement compact et immobile des grains de catalyseur à l'intérieur d'une enceinte généralement immobile. Cette technologie semble cependant peu adaptée à la présente application, pour laquelle des échanges thermiques doivent s'opérer en même temps que la réaction. En effet, des échangeurs de chaleur sont insérés à l'intérieur du lit fixe catalytique, avec d'une part pour corollaire un contrôle difficile du profil de la température des fluides en tout point du lit catalytique, et d'autre part des problèmes de dimensionnement, d'encombrement et de compacité du dispositif. En particulier l'existence de points chauds entraînant la formation de produits indésirables à proximité des surfaces chauffantes est dans ce type de configuration inévitable. Le contrôle de la sélectivité de la réaction apparaît également difficile dans un tel arrangement. Enfin, le remplacement du catalyseur dans un seul lit fixe peut entraîner l'arrêt de l'unité. Cette technologie est donc difficilement envisageable pour des réactions par exemple de déshydrogénation où la désactivation du catalyseur est relativement rapide.

Une autre technologie employée pour des réactions catalytiques propose la mise en place d'un lit mobile constitué d'un empilement de grains de catalyseurs dans une enceinte, lesdits grains présentant généralement un déplacement du haut vers le bas du réacteur sous l'effet de la force de gravité.

Ce type de dispositif facilite d'une part avantageusement la régénération du catalyseur et d'autre part autorise un remplacement du catalyseur lors de la marche du réacteur.
Un tel réacteur, dans le cadre du reformage régénératif est par exemple décrit dans le brevet US 4,567,023.
Cependant, les réactions de déshydrogénation étant très rapides et très endothermiques, des moyens d'échanges de chaleur avec les fluides réactionnels conduisant à un apport calorifique par unité de volume très important doivent être envisagés dans le cas de l'utilisation d'un lit catalytique mobile. La réalisation d'un réacteur fonctionnant sur un tel principe doit en outre permettre le contrôle efficace de la température réactionnelle en tout point du ou des lits catalytiques (en prévenant notamment la présence de points chauds) de façon à maintenir un bon rendement et une bonne sélectivité de la réaction comme il a été mentionné précédemment.

Une solution proposée est l'insertion de tubes chauffants à l'intérieur du lit réactionnel pour assurer un transfert de chaleur aux fluides réactionnels et maintenir une température permettant un taux de conversion acceptable, par exemple décrite dans la demande de brevet DE 3318098. Cette solution présente cependant l'inconvénient de générer des gradients de température au sein même du lit entre les tubes ou circule le fluide caloporteur et n'assure donc pas un contrôle optimal de la température.

Il a été trouvé, et c'est l'un des objets de la présente invention, qu'il était possible d'améliorer de façon sensible le rendement et la sélectivité d'une réaction endothermique par un meilleur contrôle de la température des fluides réactionnels au sein du réacteur en séparant le lieu de ladite réaction et le lieu des échanges thermiques entre les moyens de chauffage et lesdits fluides. Plus précisément, selon l'invention, une multitude de zones réactionnelles séparées les unes des autres par des échangeurs de chaleur permet de contrôler continuellement et efficacement le profil de température présent au sein de l'enceinte réactionnelle.
Ainsi, l'un des objets de l'invention est une enceinte réactionnelle utilisée pour la mise en oeuvre d'un procédé de conversion chimique dans des lits catalytiques avec des moyens d'apport ou d'évacuation de chaleur intégrés et séparés desdits lits catalytiques dans ladite enceinte, présentant une forte compacité de la zone réactionnelle, ainsi qu'une utilisation optimisée du catalyseur.

Les avantages de l'enceinte réactionnelle selon la présente invention par rapport aux dispositifs connus de l'art antérieur sont :
- une nette amélioration des performances de la conversion (sélectivité, rendement),
- une fiabilité plus importante due à la simplicité et à la compacité des moyens mis en oeuvre,
- une plus grande sécurité due à la possibilité d'utilisation de fluides caloporteurs inertes chimiquement ou de la charge elle-même pour favoriser l'échange de chaleur avec les fluides réactionnels,
- un coût de fabrication et de fonctionnement faible.

Plus précisément, l'invention se rapporte à une enceinte réactionnelle de forme sensiblement allongée le long d'un axe sensiblement vertical comportant au moins deux étages dans le sens vertical dans laquelle est réalisée au moins une réaction catalytique endothermique ou exothermique et comprenant :
- des moyens d'introduction d'au moins un fluide réactionnel au niveau d'un étage,
- enceinte réactionnelle de forme sensiblement allongée le long d'un axe sensiblement vertical comportant au moins deux étages dans le sens vertical dans laquelle est réalisée au moins une réaction catalytique endothermique ou exothermique et comprenant :
   - au moins une zone réactionnelle ( 12a, 12b), catalytique par étage ( 6,7) et s'étendant sensiblement selon l'axe de l'enceinte
   - des moyens d'introduction (2) d'au moins un fluide réactionnel au niveau d'un étage adaptés à une circulation sensiblement transversale du fluide sur sensiblement toute l'étendue verticale de la zone réactionnelle
   - des moyens d'introduction du catalyseur dans la zone réactionnelle et des moyens de soutirage du catalyseur des zones réactionnelles,
   - au moins un moyen (5a) d'échange thermique des fluides réactionnels situé à l'intérieur de l'enceinte entre deux zones réactionnelles successives,
   - des moyens de transport (6) des fluides réactionnels d'un étage à un autre connectés d'une part au moyen d'échange thermique et d'autre part à la zone réactionnelle et de préférence connectés au moyen d'échange thermique de l'étage considéré et aux moyens d'introduction des fluides réactionnels de l'étage suivant
   - des moyens de récupération des fluides réactionnels en aval du dernier étage
   l'épaisseur de chaque zone réactionnelle étant déterminée de façon à limiter la variation de température dans la dite zone et le moyen d'échange thermique étant adapté à ajuster la température d'entrée des fluides réactionnels dans la zone réactionnelle à un niveau sensiblement au plus égal à celui de la température des fluides réactionnels à l'entrée de la zone précédente.

Par niveau de température sensiblement au plus égal, on entend :
- soit un niveau de température à l'entrée d'une zone (i) sensiblement le même que celui à l'entrée dans la zone précédente (i-1),
- soit un niveau de température à l'entrée d'une zone (i) inférieur à celui à l'entrée dans la zone précédente (i-1).

Le plus souvent, l'enceinte est de forme sensiblement cylindrique et le ou les fluides réactionnels circulent sensiblement radialement le long des étages de ladite enceinte.

Préférentiellement, la ou les réactions catalytiques sont endothermiques et un fluide caloporteur dont la température est supérieure à la température des fluides réactionnels circule dans la ou les zones d'échanges thermiques.

Selon une caractéristique de l'enceinte, le catalyseur peut être sous forme de lits fixes.
Les moyens d'introduction et de soutirage du catalyseur peuvent alors comprendre une vanne disposée à l'entrée de la zone réactionnelle du premier étage et une vanne disposée à la sortie de la zone réactionnelle du dernier étage, ces zones communiquant entre-elles.

Selon une variante de l'enceinte, le catalyseur peut être sous forme d'un lit mobile, à écoulement sensiblement gravitaire, la ou les zone réactionnelle(s) d'un étage étant reliée(s) à celle(s) de l'étage inférieur par au moins un passage à section S 1 réduite par rapport à la section S2 de la zone réactionnelle, la ou les zones réactionnelles du premier étage comportant les moyens d'introduction du catalyseur et la ou les zones réactionnelles du dernier étage comportant les moyens de soutirage du catalyseur, lesdits moyens de soutirage comprenant un organe d'ajustement et de contrôle de la vitesse d'écoulement du catalyseur.

En fonction de la ou des réactions chimiques envisagées, en particulier de leurs caractéristiques cinétiques et/ou thermodynamiques, et en fonction des taux de conversion et de la sélectivité recherchés pour ladite ou lesdites réactions, la charge pourra circuler globalement dans l'enceinte sans sortir du cadre de l'invention soit à co-courant soit à contre-courant du catalyseur.

Selon une autre variante de l'enceinte, le catalyseur peut être sous forme d'un lit fixe pendant une majeure partie du temps et être sous forme d'un lit mobile périodiquement, pendant une mineure partie du temps. Cela permet de renouveler périodiquement une partie du catalyseur usé par du catalyseur frais ou régénéré.

Dans le cas du fonctionnement en lit mobile, des moyens de renouvellement et de soutirage seront le plus souvent choisis de telle façon qu'ils permettent la circulation du catalyseur du haut vers le bas de ladite enceinte d'une manière continue ou discontinue d'une zone réactionnelle supérieure à une zone réactionnelle inférieure, sous l'effet de la force de gravité.
Le renouvellement et le soutirage permettant la circulation du catalyseur dans le ou les lits de catalyseurs pourront être effectués soit de manière continue soit de manière discontinue (par exemple 10 % du volume total tous les trois jours), le ou les lits de catalyseur pouvant être alors assimilés à des lits mobiles. Le taux de renouvellement par rapport au volume total de catalyseur lors d'une circulation discontinue sera optimisé par l'homme de l'art selon toute technique connue, par exemple en fonction des propriétés du catalyseur employé et de la ou des réactions chimiques recherchées. Il est bien sûr possible d'envisager sans sortir du cadre de l'invention un renouvellement du catalyseur pouvant aller jusqu'à la totalité du volume contenu dans le ou les lits de catalyseurs.
Selon un mode préféré de réalisation en lit mobile, la circulation du catalyseur et des fluides réactionnels est globalement à co-courant suivant l'axe de l'enceinte.

Préférentiellement, un lit de catalyseur peut être divisé en une zone réactionnelle par étage, la section S2 du lit catalytique au niveau des zones réactionnelles étant supérieure à la section S1 de passage dudit catalyseur entre deux étages réactionnels successifs.

En général, l'enceinte réactionnelle comporte au moins deux lits catalytiques disposés de telle façon qu'une zone réactionnelle (12) alterne avec une zone d'échange thermique (5) dans le sens de circulation (16) des fluides réactionnels.

De préférence, l'enceinte réactionnelle comprend au moins deux étages et au moins deux zones réactionnelles par étage.

Selon un mode préféré de réalisation, l'enceinte comprend entre 3 et 12 zones réactionnelles successives, bornes comprises, dans le sens de circulation des fluides réactionnels, de manière plus préférée entre 4 et 8 zones, bornes incluses.

Selon un premier mode de réalisation, au moins l'une des zones réactionnelles présente une forme sensiblement plane.

Selon un deuxième mode de réalisation, au moins l'une des zones réactionnelles présente une section de forme sensiblement annulaire.

Selon un troisième mode de réalisation, au moins l'une des zones réactionnelles présente une section de forme sensiblement elliptique.
Il est possible selon l'invention que l'enceinte réactionnelle comprenne, en aval d'au moins une zone d'échange dans le sens de circulation des fluides réactionnels, au moins un moyen favorisant le mélange des fluides réactionnels issus de cette zone d'échange, avant leur introduction dans une zone réactionnelle située en aval de ladite zone d'échange.

Selon un mode avantageux de réalisation, un organe placé sensiblement au centre d'au moins un étage permet une séparation des fluides réactionnels en plusieurs courants, chaque courant traversant séparément ensuite au sein de cet étage une succession de zones réactionnelles et de zones d'échanges thermiques.

Dans un mode de réalisation alternatif, les moyens de transport des fluides réactionnels d'un étage à un autre sont disposés sensiblement à proximité de l'axe central de l'enceinte.

En général, au moins l'une des zones d'échange thermique comprend une série de tubes à ailettes, les fluides réactionnels circulant à l'extérieur desdits tubes.

On pourra avantageusement utiliser une enceinte réactionnelle selon l'invention pour la déshydrogénation de paraffines linéaires comprenant entre environ 3 et environ 20 atomes de carbone.
Il sera également avantageux d'utiliser une enceinte réactionnelle selon l'invention dans un procédé de fabrication de composés aromatiques dont au moins l'un des substituants du cycle aromatique est une chaîne aliphatique linéaire, en général alcoyle, comprenant de 3 à 20 atomes de carbone et dont l'une des étapes est la formation dans ladite enceinte de composés mono-oléfiniques.

L'invention concerne aussi un procédé de conversion d'une charge hydrocarbonée mettant en oeuvre l'enceinte réactionnelle comportant au moins deux étages réactionnels catalytiques caractérisé en ce que l'on fait circuler sensiblement transversalement la charge à une température adéquate dans au moins une zone réactionnelle d'un premier étage de l'enceinte, on récupère un fluide réactionnel en sortie de la zone réactionnelle, on échange de la chaleur entre le fluide réactionnel et un fluide d'échange de chaleur dans au moins une zone d'échange thermique située en aval de la zone réactionnelle et à l'intérieur de l'enceinte et on fait circuler le fluide réactionnel après échange thermique dans au moins une zone réactionnelle d'un étage subséquent, on récupère un effluent de conversion provenant du dernier étage de l'enceinte réactionnelle, le temps de séjour du catalyseur dans chaque zone réactionnelle et la vitesse spatiale horaire de la charge étant déterminés de façon à limiter la variation de température dans chaque zone réactionnelle et l'échange de chaleur étant contrôlé de façon à ajuster la température du fluide réactionnel entrant dans la zone réactionnelle à un niveau sensiblement au plus égal à celui de température du fluide réactionnel entrant dans la zone précédente.

Par vitesse spatiale horaire, on entend le rapport du débit massique horaire des hydrocarbures sur la masse de catalyseur. Selon une variante du procédé, lorsque la zone réactionnelle d'un étage communique avec celle d'un étage subséquent dans des conditions de lit mobile de catalyseur, l'écoulement de la charge et/ou des fluides réactionnels et l'écoulement du catalyseur sont à courants croisés.

Selon une autre variante du procédé, on peut faire fonctionner chaque zone réactionnelle en lit fixe pendant une majeure partie du temps et en lit mobile pendant une mineure partie du temps de manière à effectuer un soutirage périodique d'une partie du catalyseur.

Les conditions opératoires peuvent être les suivantes :
. ppH (vitesse horaire spatiale) : 1 à 100 h⁻¹, de préférence 5 à 30 h⁻¹,
. temps de contact (séjour) du catalyseur dans chaque zone : 0,01 s à 1 s, de préférence 0,03 à 0,1 s.

On peut limiter la variation de température dans chaque zone réactionnelle à une valeur comprise entre 2 et 50°C et de préférence entre 4 et 15°C.

Lorsque le catalyseur est utilisé sous forme d'un lit mobile de manière continue ou séquentielle, il peut circuler gravitairement à une vitesse comprise généralement entre 1 cm/h et 20 cm/h et de préférence entre 2 cm/h et 10 cm/h.

Selon une autre caractéristique du procédé, une partie du catalyseur peut être soutirée à la sortie de l'enceinte et être régénérée dans au moins une zone de régénération située à l'extérieur de l'enceinte et réintroduite dans la zone réactionnelle à l'intérieur de l'enceinte.

Un appoint de catalyseur frais peut bien évidemment être apporté.

L'invention sera mieux comprise en référence aux figures 1 à 8 qui illustrent différents modes de réalisation de l'invention sans toutefois en limiter la portée.

La figure 1 illustre un premier mode de réalisation d'une enceinte réactionnelle selon l'invention dans laquelle sont présents des lits catalytiques de forme globalement plane répartis en plusieurs étages.
La figure 2 est une coupe transversale de la figure 1 selon l'axe A-A'.

La figure 3 illustre un deuxième mode de réalisation d'une enceinte réactionnelle dans laquelle la forme des lits catalytiques est sensiblement annulaire.

La figure 4 illustre un troisième mode de réalisation de l'enceinte semblable à celui de la figure 3 mais pour lequel les lits catalytiques prennent une forme sensiblement elliptique.

La figure 5 illustre un quatrième mode de réalisation de l'invention présentant une succession de lits catalytiques de tailles différentes.

La figure 6 schématise suivant un autre mode de réalisation une disposition en étoile des lits catalytiques au sein de l'enceinte réactionnelle.

La figure 7 illustre un sixième mode de réalisation dans lequel les lits successifs sont de formes différentes.

La figure 8 schématise un septième mode de réalisation de l'invention (vue de dessus) dans lequel on réalise le transport et le passage des fluides réactionnels d'un étage à un autre à proximité de l'axe central de l'enceinte.

La figure 9 schématise un autre mode de réalisation de l'invention dans lequel un lit annulaire est présent au sein de chaque étage et dans lequel les moyens d'échange de chaleur entre les fluides réactionnels et caloporteur sont disposés entre les étages.

La figure 10 illustre une disposition alternative de celle représentée par la figure 9.

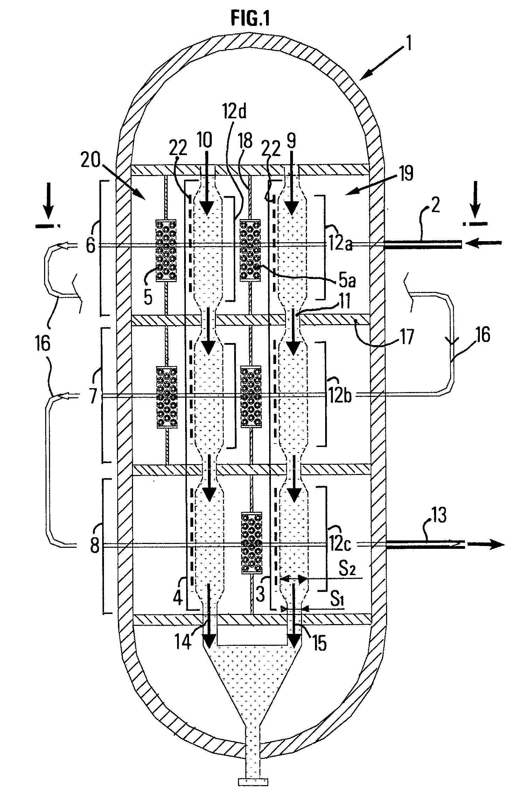

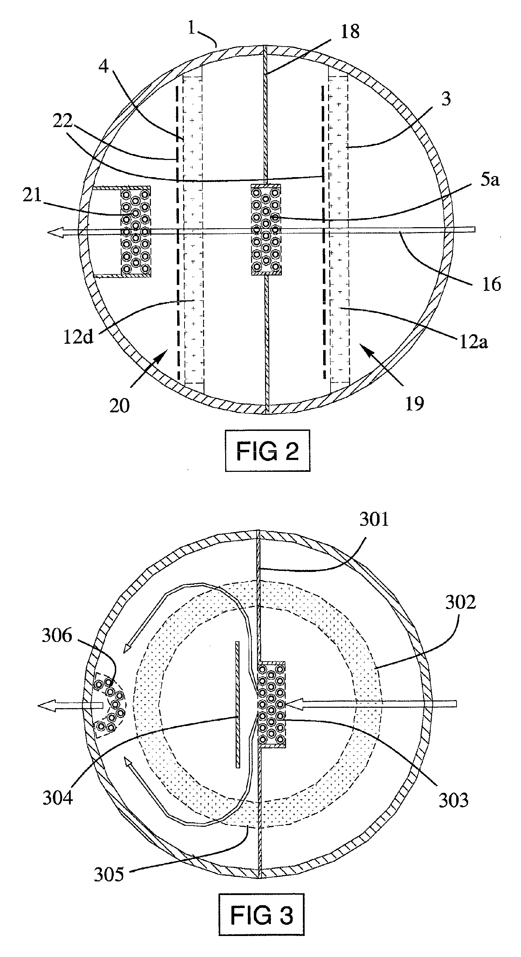

Le réacteur schématisé sur les figures 1 et 2 comprend une enceinte 1 sensiblement cylindrique à l'intérieur de laquelle sont disposés deux lits catalytiques 3 et 4 séparés par des zones d'échanges de chaleur ou échangeurs 5. La charge gazeuse initiale à traiter est introduite dans la partie haute du réacteur 1 par un moyen d'introduction 2 puis traverse sensiblement radialement une succession de zones réactionnelles 12 et de zones d'échanges thermiques 5. Les fluides résultant de ces traversées successives, mélange de produits et de réactifs non convertis, seront appelés dans la suite de la description fluides réactionnels. On distingue ainsi dans le sens de circulation de la charge initiale à traiter un lit 3 disposé en amont du premier échangeur 5a et un lit 4 disposé en aval du premier échangeur 5a. Les lits 3 et 4 présentent dans le mode de réalisation illustré par les figures 1 et 2 une forme sensiblement plane. L'enceinte réactionnelle est divisée en plusieurs étages 6, 7, 8 séparés par des plaques 17 étanches horizontales, à travers lesquels cheminent les fluides réactionnels suivant le circuit indiqué par la succession de flèches 16. L'enceinte schématisée par la figure 1 comprend ainsi six zones réactionnelles 12 successives dans le sens de circulation (16) des fluides réactionnels.
La charge gazeuse initiale arrivant par le moyen d'introduction 2 traverse radialement l'étage supérieur 6 de l'enceinte et la première zone catalytique 12a du lit amont 3 contenant la partie la plus fraîche du catalyseur. Les fluides réactionnels issus de cette traversée sont répartis de façon homogène sur toute la surface de sortie de la zone réactionnelle 12a sous l'effet d'un organe de distribution 22, de type plaque à trous par exemple, et générant une perte de charge uniforme sur la totalité de ladite surface.
Les fluides réactionnels sont ensuite confinés dans une première zone d'échange sous l'effet de plaques 18 délimitant dans l'enceinte deux zones hémicylindriques 19, 20 sensiblement égales (figure 2) et ne communiquant que par une première zone d'échange de chaleur 5a dans laquelle est disposée une série de tubes permettant l'échange de chaleur entre un fluide caloporteur et le fluide réactionnel. Cet échange de chaleur sera suffisant pour porter la température des fluides réactionnels à une valeur optimisée pour obtenir un taux de conversion et une sélectivité acceptable de la réaction chimique et pour garantir une bonne tenue chimique du catalyseur. Les fluides réactionnels réchauffés traversent ensuite le lit aval 4 au niveau d'une deuxième zone catalytique 12d avant de passer dans l'étage immédiatement inférieur 7 pour retraverser selon le même principe une série de zones réactionnelles 12 et d'échangeurs thermiques 5. A la sortie de l'étage final 8, les fluides sont collectés par un moyen de récupération 13. Afin d'éviter des variations de température des fluides réactionnels, leur passage d'un étage à un autre sera préférentiellement interne à l'enceinte 1.
Il résulte de ce qui précède que le catalyseur et les fluides réactionnels peuvent circuler globalement à co-courant descendant dans l'enceinte mais que leur mise en contact se fait par une circulation croisée au sein de chaque étage réactionnel. Comme il n'est pas procédé à un ajout de catalyseur entre les zones réactionnelles, cette disposition conduit à un taux de cokéfaction graduel du catalyseur au sein de l'enceinte réactionnelle, les fluides réactionnels traversant au cours de leur trajet un catalyseur de plus en plus usé et coké. Lorsque le catalyseur arrive en fond de réacteur, une trémie de soutirage assure son évacuation vers l'extérieur de l'enceinte réactionnelle.
Le parcours des fluides et la disposition entre étages présentés sur la figure 1 ne sont bien sûr qu'illustratifs et ne limitent en rien d'autre possibilités d'acheminement et de distribution des fluides au sein d'un étage ou entre deux étages de l'enceinte réactionnelle. Chaque lit catalytique 3, 4 est alimenté au niveau de son extrémité supérieure 9, 10 par un moyen d'introduction d'un catalyseur solide (non représenté). Par exemple le chargement et/ou l'alimentation sera effectué grâce à une même trémie d'alimentation de catalyseur qui répartit uniformément le catalyseur entre les deux lits. Le catalyseur s'écoule de haut en bas très lentement le long de chacun de ces lits sous l'effet des forces de gravité pour passer d'un étage supérieur à un étage inférieur. La vitesse d'écoulement gravitaire du catalyseur est contrôlée par un orifice calibré non représenté sur la figure disposé en sortie de la zone réactionnelle 12c du dernier étage.
Le catalyseur usé est finalement soutiré dans la partie basse de l'enceinte 1 par des moyens de soutirage 14, 15, reliés à une trémie de soutirage, le soutirage pouvant se faire soit de manière continue, soit de façon séquentielle. Si on détaille le lit amont 3, celui-ci présente entre deux étages successifs (6-7 ou 7-8) de l'enceinte, au niveau de moyens ou jambes de transfert 11, une section de communication (S1) et de restriction inférieure à la section (S2) des zones réactionnelles (12a, 12b, 12c). Le lit aval présente une même disposition. La présence de moyens de transfert 11 de section restreinte permet un mélange efficace des grains de catalyseur issus de l'étage supérieur et une redistribution homogène vers l'étage inférieur de ces mêmes grains. De cette façon, le catalyseur présent en tête de chaque zone réactionnelle présente une température et un taux de cokéfaction très uniforme quel que soit l'étage considéré. Un tel arrangement présente l'avantage d'une sélectivité accrue de la réaction, ainsi qu'une meilleure gestion de l'utilisation du catalyseur. La forme, la longueur et le nombre des moyens de transfert seront optimisés selon l'homme de l'art de telle façon que l'écoulement d'une zone à l'autre se rapproche le plus possible d'un écoulement piston, c'est à dire de façon à limiter les espaces où l'écoulement des grains est plus faible, et où la cokéfaction serait accentuée. Ces moyens de transfert pourront par exemple prendre la forme de tubes judicieusement répartis entre une zone réactionnelle plane supérieure et une zone réactionnelle plane inférieure.
De même l'épaisseur des lits catalytiques sera déterminée par toute technique connue de l'homme de l'art pour maintenir une température au sein du lit réactionnel à un niveau acceptable, la variation de température entre l'entrée et la sortie de lit étant la plus faible possible.

Les grains de catalyseurs sont maintenus au sein du lit mobile par des grilles d'un type connu permettant la traversée sensiblement radiale des zones réactionnelles par les fluides réactionnels.

Les fluides caloporteurs utilisables dans les échangeurs 5 sont par exemple la vapeur d'eau sous pression, dont la pression varie suivant les transferts thermiques nécessaires au bon déroulement de la réaction chimique entre 0,5 MPa et 10 MPa absolus bornes comprises, voire entre 2 et 5 MPa absolus, ou encore un gaz chaud présent sur le site d'exploitation. L'échangeur de chaleur peut être un échangeur constitué de tubes à ailettes, les fluides réactionnels traversant l'échangeur du coté des ailettes. Le choix de tubes à ailettes présente l'avantage important de diminuer notablement la température de paroi donc les risques de cokéfaction au niveau des parois de ces tubes. Sans sortir du cadre de l'invention il est également possible d'utiliser tout type connu de surface d'échange. Suivant le niveau de contrôle de la température envisagée au sein de l'enceinte et/ou les conditions opératoires imposées par la réaction chimique désirée, il est possible d'envisager une alimentation en fluide caloporteur par échangeur ou une alimentation commune en fluide caloporteur pour plusieurs échangeurs montés en série.
Une partie des fluides réactionnels peut passer d'une zone réactionnelle à celle du dessous au travers des moyens de transfert 11 du lit catalytique. Cette quantité reste cependant minime dans le cas d'une circulation co-courant d'ensemble fluide-catalyseur en raison du bilan pression global dans l'enceinte. D'autre part, la plus faible valeur de la section S1 des moyens de transfert 11 favorise la circulation du gaz d'une zone réactionnelle à la suivante via l'échangeur de chaleur, plutôt que de passer directement par lesdits moyens. Si toutefois une partie trop importante des fluides venait à passer directement à travers les moyens de transfert, il pourra être injecté en partie basse de chaque zone réactionnelle, une faible quantité de gaz inerte dont le but serait de faire barrage aux dits fluides. En sortie de chaque échangeur, il peut également être disposé un dispositif permettant de créer une perte de pression afin d'éviter tout passage préférentiel des gaz à la traversée de l'échangeur.

La figure 3 schématise une disposition différente des lits catalytiques dans l'enceinte réactionnelle. La section du lit catalytique dans sa globalité est annulaire, et séparé physiquement par un organe mécanique 301 isolant le lit global en deux secteurs hémicylindriques étanches. La charge traverse le premier secteur ou premier lit 302, puis passe à travers un échangeur 303, puis les fluides réactionnels issus de 302 sont redistribués pour assurer une bonne homogénéité de température via un organe 304 favorisant un mélange turbulent, puis traverse un second secteur ou deuxième lit 305. Le gaz est ensuite collecté sur un coté du réacteur, en passant par un échangeur 306 afin de le remonter à la température désirée avant son introduction dans l'étage inférieur, fonctionnant par exemple sur un principe identique à celui de l'étage décrit.

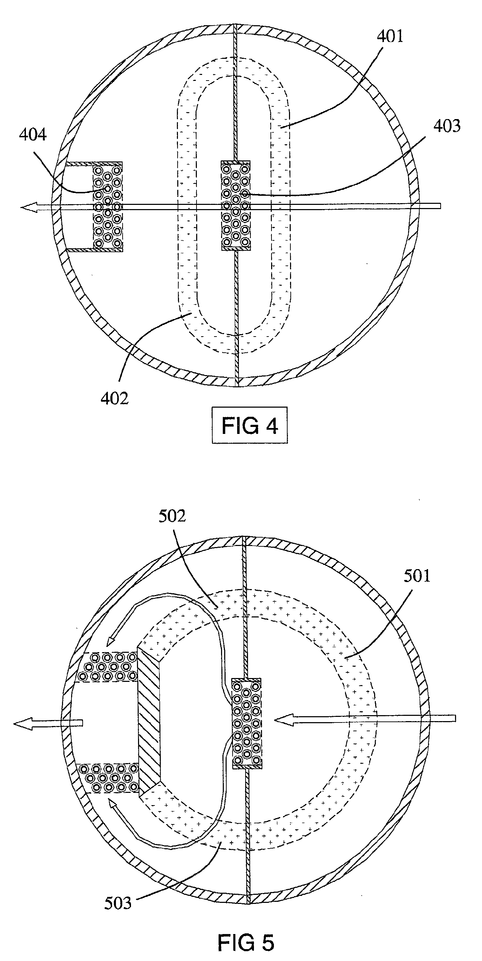

La figure 4 présente un étage de réacteur identique à celui de la figure 3 mais composé de deux lits annulaires 401, 402 de forme sensiblement hémi-elliptique, et dont l'avantage est de permettre un gain de place dans l'enceinte réactionnelle à même de permettre une plus grande facilité d'inspection et de nettoyage ultérieur des échangeurs 403, 404.

La figure 5 illustre un autre mode de réalisation d'un étage de l'enceinte réactionnelle, sensiblement identique à celui décrit en relation avec la figure 3 mais composé de trois lits annulaires 501, 502, 503. Le premier lit est identique à celui de la figure 3, les deux suivants sont de tailles inférieures. Cette disposition présente l'avantage de faire varier la quantité de catalyseur suivant les lits.

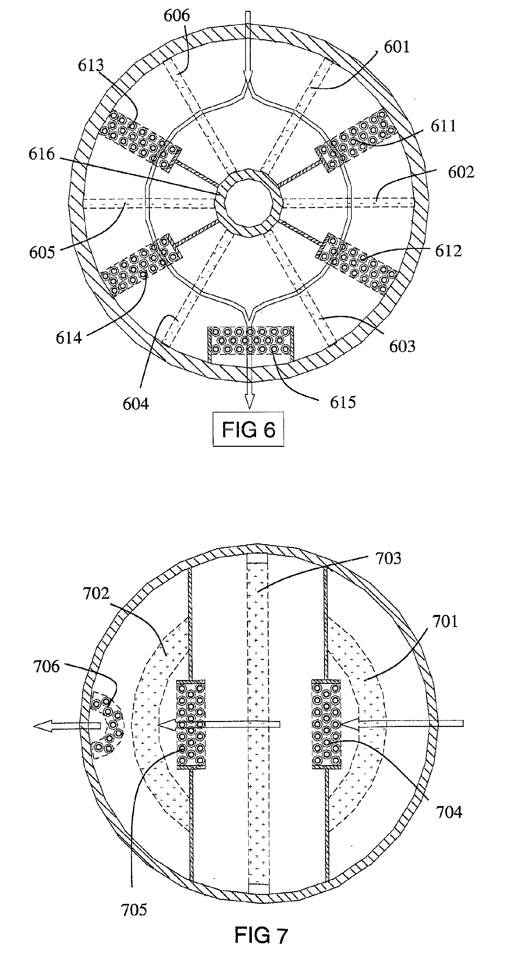

La figure 6 présente un mode de réalisation d'un étage de l'enceinte réactionnelle dans lequel six lits catalytiques plans (601 à 606) sont disposés en étoile. Entre chaque lit est disposé un échangeur (611 à 614). Les fluides réactionnels traversent donc, à chaque étage, trois lits catalytiques en série. Il est donc disposé en comptant l'échangeur placé à la sortie de l'étage cinq échangeurs à chaque étage (611 à 614 et 615), le dernier étant commun pour les deux derniers lits catalytiques. Un organe central 616 permet la distribution des fluides réactionnels à travers la succession de zones réactionnelles et d'échanges thermiques.

La figure 7 présente un étage de réacteur dans lequel trois lits catalytiques, deux de section annulaire 701, 702 et un plan 703, sont disposés en série. Entre chaque lit est disposé un échangeur 704, 705. Les fluides réactionnels traversent dans l'étage, trois lits catalytiques en série (701, 702, 703). Il est au final disposé trois échangeurs (704, 705, 706) dans l'étage.

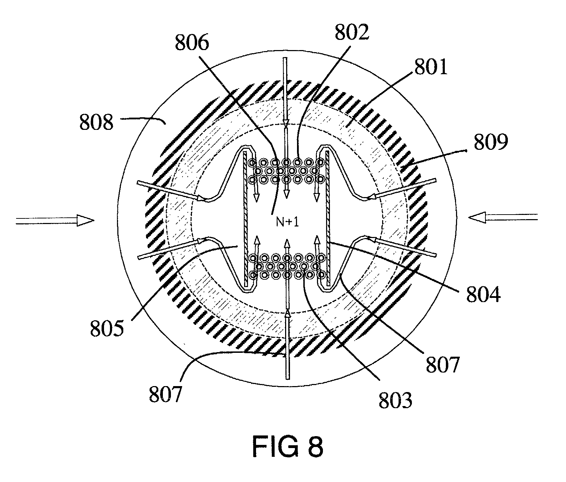

La figure 8 présente un mode de réalisation d'un étage N de l'enceinte réactionnelle de forme sensiblement circulaire dans lequel un lit catalytique cylindrique 801 est disposé. Les fluides réactionnels, issus de la partie périphérique 808 de l'étage, traversent le lit radialement puis circulent au travers de zones d'échange de chaleur (802, 803) situées de part et d'autre d'un collecteur central 806. Les flèches 807 montrent par exemple différents trajets possibles pour lesdits fluides. Des dispositifs de guidage et de mélange des fluides réactionnels (804, 805) sont disposés afin d'obliger lesdits fluides à traverser les zones d'échange (802, 803). Les fluides réactionnels réchauffés progressent ensuite par exemple vers l'étage N+1 qui présente une disposition identique à celle de l'étage N. Une plaque 809 disposée entre les étages N et N+1 permet la redistribution des fluides réactionnels dans la partie périphérique de l'étage N+1. Bien que non représentés sur la figure 8, il est évident que des moyens connus permettront d'empêcher le passage direct entre les parties périphériques 808 successives des étages N et N+1.

Dans l'exemple illustré par la figure 8, chaque étage comporte une zone réactionnelle et un échangeur. Il est cependant possible sans sortir du cadre de l'invention de disposer, au niveau de chaque étage et en amont du collecteur central dans le sens de circulation des fluides réactionnels, plusieurs lits catalytiques circulaires successifs entre lesquels viennent s'insérer des zones d'échange de chaleur.

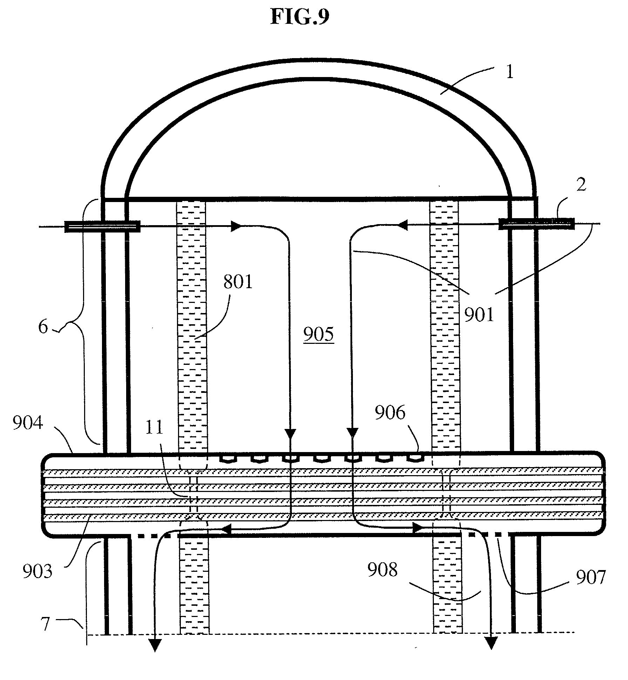

La figure 9 illustre un autre mode de réalisation particulièrement avantageux de la présente description. Dans ce mode, on retrouve pour chaque étage un lit catalytique de forme sensiblement annulaire analogue à celui de la figure 8. Le réacteur 1, présenté figure 9 en coupe selon sa plus grande longueur, présente une succession d'étages dont la disposition est identique et dont seuls les deux premiers 6 et 7 sont représentés. Dans ce mode de réalisation, au contraire des précédents, les moyens d'échange de chaleur sont disposés entre les étages successifs du réacteur 1. Lesdits moyens d'échange de chaleur se présentent sous la forme de tubes 903 dans lequel circule le fluide caloporteur. Les tubes 903 sont rassemblés et disposés selon toute technique connue de l'homme du métier au sein d'une enceinte 904 dans laquelle circulent les fluides réactionnels. L'enceinte 904 contenant les tubes échangeurs 903 présente, dans sa partie hémicylindrique supérieure et au niveau de la partie s'ouvrant sur l'espace 905 délimité par la surface interne du lit cylindrique 801, au moins un orifice ou une fente 906. En générai, l'homme du métier cherchera à augmenter le nombre de ces orifices 906 de façon à optimiser le contact et ainsi à maximiser la surface efficace d'échange de chaleur entre les fluides réactionnels et les tubes échangeurs 903 au sein de l'enceinte 904. Dans sa partie hémicylindrique inférieure, l'enceinte 904 est percé de fentes 907 permettant le passage des fluides réactionnels ayant échangé de la chaleur vers l'étage inférieur 7. Les fentes 907 sont pratiquées de telle façon qu'elles permettent la redistribution desdits fluides dans la partie périphérique 908 de l'étage 7, c'est à dire le long de la surface externe du lit cylindrique catalytique 801. Selon le mode de réalisation de la figure 9, des jambes de transfert 11, disposés autour du cylindre 904 et analogues à celles décrites en relation avec la figure 1, assurent dès que nécessaire la circulation du catalyseur au sein du lit 801.
Lors du fonctionnement du réacteur 1, le cheminement des fluides réactionnels est illustré par les flèches 901. Les réactifs sont introduits par les moyens 2 puis traversent le lit 801 vers l'espace interne 905. Les fluides issus du lit catalytiques passent dans l'enceinte 904 et échangent de la chaleur avec les tubes 903 avant de passer via les fentes 907 dans la partie annulaire périphérique 908 de l'étage inférieur 7. L'étage 7 présente une disposition analogue à l'étage 6 et une même succession d'étapes y est effectuée.
Le mode de réalisation de l'invention illustré par la figure 9 présente deux avantages :
- d'une part il permet, comme cela est illustré par l'itinéraire 901, une mise en contact par flux croisés des courants de fluides réactionnels et des fluides caloporteurs, une telle disposition étant généralement considérée comme favorisant les échanges thermiques,
- d'autre part les enceintes 904 contenant les tubes 903 pourront être facilement extraits de l'ensemble du réacteur, en vue par exemple de leur nettoyage.

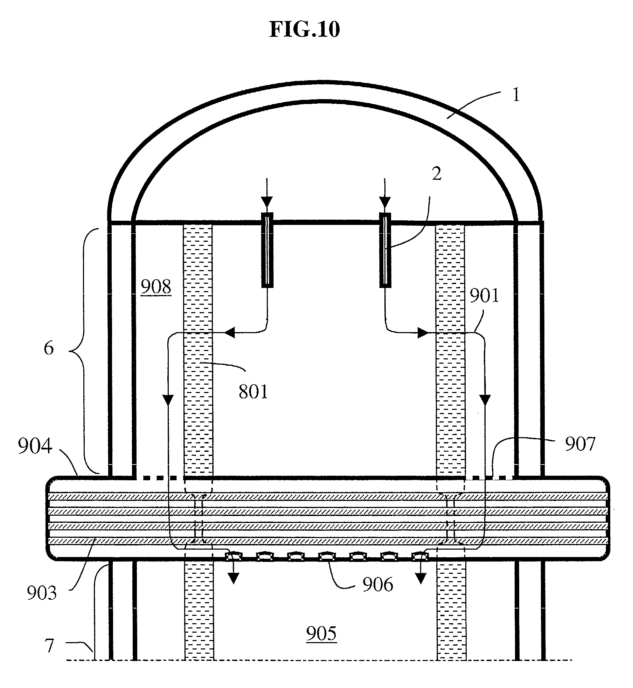

La figure 10 illustre un mode de réalisation de l'invention similaire à celui décrit précédemment en relation avec la figure 9. Les mêmes éléments sont ainsi représentés de manière identique et leur numérotation est conservée sur les deux figures. Les différences structurelles entre les deux modes résident :
- dans la position des moyens 2 qui permettent selon le présent mode l'introduction des réactifs dans l'espace 905,
- dans la position de l'élément 904.
Ainsi, dans le mode de réalisation illustré par la figure 10, la partie hémisphérique percée de fentes 907 de l'enceinte 904 est placée de telle façon que lesdites fentes communiquent avec l'espace annulaire externe 908 de l'étage supérieur 6 et que les orifices 906 permettent le passage des fluides réactionnels de l'intérieur de l'enceinte 904 vers l'espace 905 de l'étage inférieur 7.
De par ces différences structurelles, la circulation des fluides réactionnels, illustrée par l'itinéraire fléché 901, se fait ainsi au sein de chaque étage du réacteur 1 dans un sens contraire à celui du mode de réalisation précédent (figure 9). Le mode de réalisation illustré par la figure 10 présente l'avantage de favoriser le mélange et d'améliorer l'homogénéité de la température des fluides réactionnels à la sortie de l'élément 904.

Sans sortir du cadre de l'invention l'enceinte réactionnelle peut être constituée de plusieurs étages identiques ou d'étages dont la disposition est différente. Le nombre total d'étages de zones réactionnelles et de zones d'échange par étage sera déterminé selon toute technique connue de manière à optimiser le taux de conversion et la sélectivité de la réaction chimique vers le produit final désiré.

Il a été illustré dans les différentes figures, le cas où il existe une circulation croisée du catalyseur et de la charge réactionnelle, le catalyseur circulant en lit mobile et gravitairement, la vitesse de circulation descendante du catalyseur étant contrôlée voire imposée par un orifice calibré en sortie de la zone réactionnelle du dernier étage de l'enceinte, autorisant une vitesse généralement comprise entre 1 cm/h et 20 cm/h.

Selon une variante avantageuse du dispositif, non représentée sur la figure 1, mais pouvant être calquée sur cette figure 1, chaque zone réactionnelle peut être constituée d'un lit fixe de catalyseur.
Dans le dispositif pouvant fonctionner en lit fixe, une vanne d'alimentation est située en amont de la trémie d'alimentation en catalyseur de la ou des zone(s) réactionnelle(s) du premier étage et une vanne de soutirage est située en aval de la trémie de soutirage du catalyseur de la ou des zone(s) réactionnelle(s) du dernier étage.
La charge hydrocarbonée circule transversalement à travers une première zone réactionnelle du premier étage, le fluide réactionnel qui en résulte traverse un premier échangeur thermique du premier étage, puis circule transversalement dans une seconde zone réactionnelle du premier étage et enfin échange de la chaleur dans un deuxième échangeur de ce même étage.
Le fluide réactionnel sortant du premier étage est introduit dans un deuxième étage où il circule transversalement dans une première zone réactionnelle du second étage, traverse un premier échangeur thermique du second étage, circule transversalement dans une seconde zone réactionnelle du second étage et enfin échange de la chaleur dans un deuxième échangeur de ce même étage. La séquence d'étapes est répétée dans le troisième étage et ainsi de suite, jusqu'à l'obtention d'un effluent final de conversion.

Le dispositif peut fonctionner selon ce principe en lit fixe pendant une longue période de temps, par exemple deux ou trois jours, puis peut fonctionner en lit mobile par ouverture contrôlée de la vanne de soutirage périodiquement, par exemple, pendant une période de temps n'excédant pas une heure.

L'exemple donné ci-dessous, nullement limitatif, permet d'illustrer la configuration préférée représentée selon la figure 8 :
la charge est introduite par un distributeur annulaire de diamètre 2000 mm et d'épaisseur 200 mm.
Elle traverse sensiblement radialement le lit catalytique annulaire de diamètre 1600 mm, d'épaisseur 50 mm et de hauteur 2000 mm.

Le collecteur central a un diamètre de 1500 mm et une épaisseur de 100 mm. L'échangeur placé au centre occupe un espace carré de côté 800 mm. Cet échangeur est composé de 212 tubes de diamètre 19,05 mm de type BWG 16 et de diamètre intérieur 15,75 mm. Ces tubes sont disposés selon un pas carré de 25,3 mm. Ils peuvent le cas échéant être munis d'ailettes permettant d'atteindre la surface d'échange requise.
Dans l'exemple cité, on effectue la déshydrogénation d'une charge dont les caractéristiques sont données ci dessous
- Débit charge : 55689 Kg/h
- Poids moléculaire de la charge : 25,7 Kg/ Kmole
- Température d'entrée : supérieure à 450°C
- Pression d'entrée : 2 bars abs (1 bar = 10⁻¹ MPa)

Le catalyseur est réparti en 5 étages de 0,44 m³ chacun, sous forme de lit fixe, chaque étage étant relié au suivant par des jambes de retour de 2000 mm de hauteur. Entre chaque étage, dans la partie centrale se trouve un échangeur tubulaire, le fluide de réchauffement, circulant à l'intérieur des tubes étant de la vapeur à 40 bars.

Le tableau ci dessous donne la puissance de chacun des 4 échangeurs, la surface d'échange et le débit vapeur:
- Echangeur 1 810 kW 68,3 m² 0,62 m³/s
- Echangeur 2 570 kW 50,5 m² 0,44 m³/s
- Echangeur 3 450 kW 41,1 m² 0,35 m³/s
- Echangeur 4 240 kW 22,2 m² 0,18 m³/s

La vapeur est distribuée dans l'échangeur par un collecteur torique de diamètre externe 1200 mm.
Pour chacun des échangeurs la différence de température entre l'entrée et la sortie côté vapeur est de 60°C.

La température d'entrée de la charge à chaque étage est sensiblement la même.

Les conditions de température de la charge à chaque étage sont données dans le tableau ci dessous, sous la forme de la différence de température entre l'entrée et la sortie pour chaque étage :
- Premier étage : DeltaT entrée/sortie : 13,5 °C
- Deuxième étage :DeltaT entrée/sortie : 9,5°C
- Troisième étage :DeltaT entrée/sortie : 7,5°C
- Quatrième étage : DeltaT entrée/sortie : 4°C

Cet exemple montre bien que la faible épaisseur de catalyseur dans chaque zone réactionnelle traversée par les hydrocarbures et en particulier le faible rapport épaisseur sur hauteur de la zone réactionnelle (50/2000 dans le cas présent), combinée à la présence de l'échangeur situé dans le cas présent dans la partie centrale de l'enceinte permet une quasi isothermicité des zones réactionnelles. Cet exemple montre également qu'il est possible de placer dans la partie centrale de l'enceinte l'échangeur nécessaire au maintien de la quasi isothermicité des effluents réactifs.

## Revendications

1. Enceinte réactionnelle de forme sensiblement allongée le long d'un axe sensiblement vertical comportant au moins deux étages dans le sens vertical, dans laquelle est réalisée au moins une réaction catalytique endothermique ou exothermique et comprenant :
- au moins une zone réactionnelle ( 12a, 12b) catalytique par étage ( 6,7) et s'étendant sensiblement selon l'axe de l'enceinte,
- des moyens d'introduction (2) d'au moins un fluide réactionnel au niveau d'un étage adaptés à une circulation sensiblement transversale du fluide sur sensiblement toute l'étendue verticale de la zone réactionnelle,
- des moyens d'introduction du catalyseur dans la zone réactionnelle et des moyens de soutirage du catalyseur de la zone réactionnelle,
- au moins un moyen (Sa) d'échange thermique des fluides réactionnels situé à l'intérieur de l'enceinte entre deux zones réactionnelles successives
- des moyens de transport (6) des fluides réactionnels d'un étage à un autre connectés d'une part au moyen d'échange thermique, et d'autre part à la zone réactionnelle,
- des moyens de récupération des fluides réactionnels en aval du dernier étage
l'épaisseur de chaque zone réactionnelle étant déterminée de façon à limiter la variation de température dans la dite zone et le moyen d'échange thermique étant adapté à ajuster la température d'entrée des fluides réactionnels dans la zone réactionnelle à un niveau sensiblement au plus égal à celui de la température des fluides réactionnels à l'entrée de la zone précédente.

2. Enceinte selon la revendication 1 dans laquelle le catalyseur est sous forme de lits fixes.

3. Enceinte selon la revendication 1 dans laquelle le catalyseur est sous forme d'un lit mobile à écoulement sensiblement gravitaire, la ou les zone réactionnelle(s) d'un étage étant reliée à celle(s) de l'étage inférieur par au moins un passage à section S1 réduite par rapport à la section S2 de la zone réactionnelle, la ou les zones réactionnelles du premier étage comportant les moyens d'introduction du catalyseur et la ou les zones réactionnelles du dernier étage comportant les moyens de soutirage du catalyseur, lesdits moyens de soutirage comprenant un organe d'ajustement et de contrôle de la vitesse d'écoulement du catalyseur.

4. Enceinte réactionnelle selon la revendication 3 **caractérisée en ce que** la circulation du catalyseur et des fluides réactionnels est globalement à co-courant suivant l'axe de l'enceinte.

5. Enceinte réactionnelle selon l'une des revendications 1 à 4 comprenant au moins deux étages ( 6, 7) et au moins deux zones réactionnelles ( 12a, 12d) par étage.

6. Enceinte réactionnelle selon l'une des revendications 1 à 5 comprenant entre trois et douze zones réactionnelles, bornes comprises.

7. Enceinte réactionnelle selon l'une des revendications 1 à 6, **caractérisée en ce qu'**au moins l'une des zones réactionnelles présente une section de forme sensiblement plane.

8. Enceinte réactionnelle selon l'une des revendications 1 à 6, **caractérisée en ce qu'**au moins l'une des zones réactionnelles présente une section de forme sensiblement annulaire.

9. Enceinte réactionnelle selon l'une des revendications 1 à 6, **caractérisée en ce qu'**au moins l'une des zones réactionnelles présente une section de forme sensiblement elliptique.

10. Enceinte réactionnelle selon l'une des revendications 1 à 9 comprenant en aval du moyen d'échange dans le sens de circulation des fluides réactionnels au moins un moyen( 304, 804, 805) favorisant le mélange des fluides réactionnels issus du moyen d'échange, avant leur introduction dans la zone réactionnelle située en aval du dit moyen d'échange.

11. Enceinte réactionnelle selon l'une des revendications 1à 10, **caractérisée en ce que** les moyens de transport des fluides réactionnels d'un étage à l'étage inférieur sont disposés sensiblement à proximité de l'axe central de l'enceinte.

12. Enceinte réactionnelle selon l'une des revendications 1 à 11 **caractérisée en ce qu'**un organe (616) placé sensiblement au centre d'au moins un étage permet une séparation des fluides réactionnels en plusieurs courants, chaque courant traversant séparément ensuite au sein de cet étage une succession de zones réactionnelles ( 606, 605, 604 ; 601, 602, 603) et de moyens d'échanges thermiques ( 613, 614, 615 ; 611, 612, 615).

13. Enceinte réactionnelle selon l'une des revendications 1 à 12 dans laquelle au moins l'un des moyens d'échange thermique comprend une série de tubes à ailettes, les fluides réactionnels circulant à l'extérieur desdits tubes.

14. Enceinte réactionnelle selon l'une des revendications 1 à 13 dans laquelle au moins une partie desdits moyens d'échange thermique est disposée entre deux étages successifs.

15. Utilisation de l'enceinte réactionnelle selon l'une des revendications 1 à 14 à la déshydrogénation de paraffines linéaires comprenant entre environ 3 et environ 20 atomes de carbone.

16. Utilisation de l'enceinte réactionnelle selon l'une des revendications 1 à 14 à un procédé de fabrication de composés aromatiques dont au moins l'un des substituants du cycle aromatique est une chaîne aliphatique linéaire, en général alcoyle, comprenant de environ 3 à environ 20 atomes de carbone et dont l'une des étapes est la formation de composés monooléfiniques.

17. Procédé de conversion d'une charge hydrocarbonée mettant en oeuvre l'enceinte réactionnelle comportant au moins deux étages réactionnels catalytiques selon l'une quelconque des revendications 1 à 14 **caractérisé en ce que** l'on fait circuler sensiblement transversalement la charge à une température adéquate dans au moins une zone réactionnelle d'un premier étage de l'enceinte, on récupère un fluide réactionnel en sortie de la zone réactionnelle, on échange de la chaleur entre le fluide réactionnel et un fluide d'échange de chaleur dans au moins une zone d'échange thermique située en aval de la zone réactionnelle et à l'intérieur de l'enceinte et on fait circuler le fluide réactionnel après échange thermique dans au moins une zone réactionnelle d'un étage subséquent, on récupère un effluent de conversion provenant du dernier étage de l'enceinte réactionnelle, le temps de séjour du catalyseur dans chaque zone réactionnelle et la vitesse spatiale horaire de la charge étant déterminés de façon à limiter la variation de température dans chaque zone réactionnelle et l'échange de chaleur étant contrôlé de façon à ajuster la température du fluide réactionnel entrant dans la zone réactionnelle à un niveau sensiblement au plus égal à celui de la température du fluide réactionnel entrant dans la zone précédente.

18. Procédé selon la revendication 17, dans lequel chaque zone réactionnelle comporte au moins un lit fixe de catalyseur.

19. Procédé selon la revendication 17, dans lequel la zone réactionnelle d'un étage communique avec la zone réactionnelle d'un étage subséquent, l'écoulement du catalyseur entre les deux zones réactionnelles étant en lit mobile et l'écoulement du fluide réactionnel étant à courant croisé par rapport à celui du catalyseur.

20. Procédé selon la revendication 17, dans lequel on fait fonctionner chaque zone réactionnelle en lit fixe pendant une majeure partie du temps et en lit mobile pendant une mineure partie du temps de manière à effectuer un soutirage périodique d'une partie du catalyseur.

21. Procédé selon l'une des revendications 17 à 20 dans lequel la vitesse spatiale horaire définie comme le rapport du débit massique de charge ou de fluide réactionnel sur la masse de catalyseur contenue dans la zone réactionnelle se situe entre 1 et 100 h⁻¹ et préférentiellement entre 5 et 30 h⁻¹.

22. Procédé selon l'une des revendications 17 à 21 dans lequel le temps de séjour de la charge dans chaque zone réactionnelle est compris entre 0,01s et 1s et de préférence entre 0,03 et 0,1s.

23. Procédé selon l'une des revendications 17, 19 à 22 dans lequel le catalyseur circule dans chaque zone réactionnelle à une vitesse comprise entre 1 cm/h et 20 cm/h et préférentiellement entre 2 cm/h et 10 cm/h.

24. Procédé selon l'une des revendications 17 à 23 dans lequel on limite la variation de température dans une zone réactionnelle à une valeur comprise entre 2 et 50°C, et de préférence à une valeur comprise entre 5 et 15°C.

25. Procédé selon l'une des revendications 17 à 24 dans lequel une partie du catalyseur est soutirée à la sortie de l'enceinte, est régénérée dans au moins une zone de régénération située à l'extérieur de l'enceinte et est réintroduite dans la zone réactionnelle à l'intérieur de l'enceinte.
